# EUROPEAN PATENT APPLICATION

(11) **EP 4 611 216 A1**
(43) Date of publication of application: **03.09.2025**
(21) Application number: 24160173.1
(22) Date of filing: 28.02.2024
(51) Int. Cl.: H02J 50/40, H02J 50/80

(54) **WIRELESS POWER TRANSFER**

(71) Applicant: Koninklijke Philips N.V., 5656 AG Eindhoven (NL)
(72) Inventor: DRAAK, Johannes Wilhelmus, 5656 AG Eindhoven (NL); LEBENS, Pascal Leonard Maria Theodoor, 5656 AG Eindhoven (NL); EGENTER, Christian Otto, 5656 AG Eindhoven (NL); FRICKER, Raphael Maximilian, 5656 AG Eindhoven (NL)
(74) Representative: Philips Intellectual Property & Standards

(57) **Abstract**

A power transmitter (101) wirelessly provides power to a plurality of power receivers (105) via an inductive power transfer signals. The power transmitter (101) comprises a power reserver (209) determining reserved power levels for power receivers. In response to receiving a power reservation request, the power reserver (209) proceeds to determine a combined reserved power level including the requested reserved power level and already reserved power levels; comparing the combined reserved power level to a maximum power level threshold; transmit a power reservation change request to an already supported power receiver (105) if the combined reserved power level exceeds the maximum power level threshold; and to reserve a reserved power level for the first power receiver (105) with this being dependent on the response to the power reservation change request received from the first supported power receiver (105).

## Description

### FIELD OF THE INVENTION

The invention relates to wireless power transfer and in particular, but not exclusively, to wireless power transfer systems operating in accordance with elements of the Ki wireless power transfer Specifications.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain). Based on the Qi Specification, an approach known as the Ki specification is being developed for high power applications, such as specifically for Kitchen appliances.

Most wireless power transfer systems, including Qi and Ki based system, are designed to operate with a variety of different devices having very different properties including different power extraction circuits and arrangements.

An important operational characteristic for wireless power transmission is to provide the appropriate amount of power to the power receivers. This may be a challenging problem as the required power may vary substantially, not only between devices, but also for the same device. For example, a kitchen appliance may require a very high level of power during operation but a very low level during a standby mode. E.g., power extraction by a kettle may be insignificant when the kettle is off/in standby mode, but may be several kWs when in operation.

In order to provide reliable operation, wireless power transfer systems such as Ki execute a power transfer initialization process that includes a phase in which suitable operational parameters are determined prior to the instigation of the power transfer. This can include determining a maximum power level that is required by, and can be provided to, the power receiver. However, although such an approach may allow improved adaptation and setting of suitable power transfer parameters, it is not ideal in all cases. It may for example in many cases result in an inefficient or limiting approach as the power transmitter is set up to be able to provide the maximum power level whereas this may not in practice be required at all times by the power receiver. This may often result in a restrictive, inefficient, and/or suboptimal operation and exploitation of the available resources.

In many practical applications, a plurality of wireless power transfer operations may be desired to support multiple power receivers. However, although it is desirable for some functionality to support such wireless power transfer operations is shared, it also tends to substantially complicate the power adaptation process and introduce additional complexities and difficulties, including the constraints that different power transfer operations may have on each other.

Hence, an improved wireless power transfer approach would be advantageous, and in particular, an approach allowing increased flexibility, reduced cost, reduced complexity, improved power transfer operation, increased reliability, increased efficiency, improved power control, improved adaptability to different device properties/characteristics, improved exploitation of available resource, improved support for multiple power receivers, an improved user experience and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a wireless power transmitter apparatus for wirelessly providing power to multiple power receivers via inductive power transfer signals, the power transmitter comprising: a plurality of power transfer coils arranged to generate the power transfer signals; a driver circuit arranged to generate drive signals for the plurality of power transfer coils to generate the power transfer signals; a communication unit arranged to communicate with multiple power receivers; a power reserver arranged to determine reserved power levels for power transfer to power receivers; a controller arranged to control the driver circuit to constrain power levels of the drive signals to not exceed reserved power levels (for the respective power receiver); wherein the communication unit is arranged to receive a power reservation request from a first power receiver, the first power reservation request comprising a request for a first reserved power level for the first power receiver; wherein the power reserver is in response to the communication unit receiving the power reservation request arranged to: determine a combined reserved power level being a combined level of at least the first reserved power level and reserved power levels (being power levels) currently reserved) for a set of supported power receivers comprising power receivers other than the first power receiver for which a power level is reserved (supported / for which reserved power levels are determined/reserved); compare the combined reserved power level to a maximum power level threshold; transmit a power reservation change request to a first supported power receiver being a power receiver of the set of supported power receivers if the combined reserved power level exceeds the maximum power level threshold; reserve a reserved power level for the first power receiver, the reserved power level for the first power receiver being determined in dependence on a response to the power reservation change request received (by the communication unit) from the first supported power receiver.

The invention may allow improved performance and/or operation and/or implementation in many embodiments. It may allow an overall improved power transfer operation in many systems and embodiments supporting a plurality of power transfers/power receivers. The approach may typically allow an improved utilization of shared resources, such as a shared maximum supply power level, a thermal heating budget, etc. The approach may allow improved interaction and support for multiple power transfers, and may in many scenarios provide improved support for multiple power transfers/power receivers. For example, in many scenarios and embodiments, the approach may allow power transfer operations to be performed that otherwise could not be supported. For example, in many scenarios a new request for power transfer can be accommodated that otherwise could not be accommodated by the power transmitter apparatus modifying the characteristics for already ongoing power transfer operations. The approach may allow reliable operation in many scenarios and may e.g. allow each power receiver to be aware of the power transfer properties that are guaranteed by the power transmitter apparatus.

A supported power receiver may be a power receiver for which a reserved power level has been determined/reserved. A supported power receiver may be a power receiver for which a power level for power transfer to the power receiver has been reserved/is guaranteed by the power transmitter apparatus. A reserved power level for a power receiver/power transfer may be a minimum level of power available/ guaranteed to be available for the power transfer to the power receiver.

The response from the first supported power receiver may be and/or include an indication of a reserved power level acceptable to the first supported power receiver. The indication may be provided in one or more messages. The power reserver may be arranged to determine the reserved power level for the first power receiver in dependence on the indication of the reserved power level acceptable to the first supported power receiver. The power reserver may be arranged to determine a modified reserved power level for the first supported power receiver in dependence on the response, and specifically dependent on the indication of the reserved power level acceptable to the first supported power receiver.

The response may be indicative of an accepted change in the reserved power level for the first supported power receiver. The response may indicate an accepted reserved power level for the first supported power receiver, including potentially other parameters for the change, such as a time interval for which the modified level may be acceptable, conditions for the change, etc.

The power reservation change request may be a request for a reduction in the reserved power level for the first supported power receiver. The power reservation change request may include an indication of a requested change in the reserved power level for the first supported power receiver.

The power reservation request may e.g. be received from the first power receiver while this is in a connected mode and/or a standby mode. The power reservation change request may e.g. be transmitted to the first supported power receiver while this is in a connected mode and/or a standby mode and/or a power transfer mode.

The first power receiver can also be referred to as the requesting power receiver. The first supported power receiver can also be referred to as the requested power receiver.

According to an optional feature of the invention, the power reserver is arranged to modify a reserved power level for the first supported power receiver dependent on the response to the power reservation change request.

This may provide improved performance and operation in many embodiments. It may in particular allow improved interworking and sharing of limited resources between a plurality of power transfers.

The power reserver 209 may for example set the reserved power level for the first supported power receiver to a level that is indicated in the response to be acceptable to the first supported power receiver.

According to an optional feature of the invention, the power reserver is arranged to set the reserved power level for the first supported power receiver to a level requested by the first supported power receiver in response to the power reservation change request; and to set the reserved power level for the first power receiver to a level such that a resulting total combined reserved power level is below the maximum power level threshold.

This may provide improved performance and operation in many embodiments. It may in particular allow improved interworking and sharing of limited resources between a plurality of power transfers. The feature may in particular in many scenarios allow more power transfers to be supported.

According to an optional feature of the invention, the power reserver is arranged to select the first supported power receiver in dependence on a power level of a drive signal for the first supported power receiver.

This may provide improved performance and operation in many embodiments. It may in particular allow improved interworking and sharing of limited resources between a plurality of power transfers. The feature may in particular provide an improved and facilitated re-configuration to allow new/modified power transfer operations to be supported.

According to an optional feature of the invention, the power reserver is arranged to select the first supported power receiver in dependence on a power level of a drive signal for the first supported power receiver during a time interval prior to the communication unit receiving the power reservation request from the first power receiver.

This may provide improved performance and operation in many embodiments. It may in particular allow improved interworking and sharing of limited resources between a plurality of power transfers.

According to an optional feature of the invention, the power reserver is arranged to select the first supported power receiver in dependence on the power level of a drive signal for the first supported power receiver in comparison to a reserved power level for the first supported power receiver.

According to an optional feature of the invention, the power reserver is arranged to select the first supported power receiver in dependence on a reserved power level for the first supported power receiver.

According to an optional feature of the invention, the power reserver is arranged to select the first supported power receiver in dependence on an assigned priority for the first supported power receiver.

These features may provide improved performance and operation in many embodiments. They may in particular allow improved interworking and sharing of limited resources between a plurality of power transfers.

According to an optional feature of the invention, the power reserver is arranged to transmit an indication of a desired change in a reserved power level for the first supported power receiver to the first supported power receiver.

This may provide improved performance and operation in many embodiments. It may in particular allow improved interworking and sharing of limited resources between a plurality of power transfers. The feature may provide an improved and/or facilitated adaptation of the reserved power levels such that an improved support of multiple power transfer operations can be performed with no or acceptable degradation of the user experience.

According to an optional feature of the invention, the power reservation change request includes an indication of a time interval for which the first reserved power level is requested.

This may provide improved operation in many scenarios and may e.g. allow more flexible reserved power level reconfigurations, and in particular may allow new power transfer operations by also exploiting temporal sharing/resource allocation.

According to an optional feature of the invention, the response includes an indication of a time interval for which a changed reserved power level for the first supported power receiver is accepted, and the power reserver is arranged to determine the reserved power level for the first power receiver in dependence on the changed reserved power level for a time interval determined in dependence on the indication of the time interval.

This may provide improved performance and operation in many embodiments. It may in particular allow improved interworking and sharing of limited resources between a plurality of power transfers.

According to an optional feature of the invention, the power reserver is further arranged to transmit a further power reservation change request to a second supported power receiver of the second set of power receivers, and to reserve a reserved power level for the second power receiver, the reserved power level for the second power receiver being determined in dependence to a response to the further power reservation change request received from the second supported power receiver.

This may provide improved performance and operation in many embodiments. It may in particular allow improved interworking and sharing of limited resources between a plurality of power transfers.

According to an optional feature of the invention, the power reserver is arranged to transmit the further power reservation change request to the second supported power receiver in response to a detection that a total reserved power level reserved for the set of supported power receivers following determination of a reserved power level for the first supported power receiver in dependence on the response to the power reservation change request exceeds a threshold.

This may provide improved performance and operation in many embodiments. It may in particular allow improved interworking and sharing of limited resources between a plurality of power transfers.

According to an optional feature of the invention, the power reserver is arranged to determine the maximum power level threshold in dependence on a measure of a maximum power level of a supply power for the power transmitter apparatus.

This may provide improved performance and operation in many embodiments. It may in particular allow improved interworking and sharing of limited resources between a plurality of power transfers.

In some embodiments, the power reserver is arranged to measure a power consumption parameter for a circuit for which power consumption is independent of power levels of the power transfer signal, and to determine the maximum power level threshold as a function of the power consumption parameter.

According to another aspect of the invention, there is provided a power receiver for wirelessly receiving power from a power transmitter via an electromagnetic power transfer signal, the power receiver comprising: an inductive power extraction element arranged to extract power from the power transfer signal; a communication unit arranged to communicate with the power transmitter; a power reservation controller arranged to request reserved power levels from the power transmitter, a reserved power level being a guaranteed power level for a power transfer; wherein the power reservation controller is further arranged to, in response to the communication unit receiving a power reservation change request from the power transmitter, determine a reduced reserved power level being a lower reserved power level than a currently reserved power level, and transmit a modified reserved power level request to the power transmitter, the modified reserved power level request being a request for a change of the currently reserved power level to the reduced reserved power level.

The power receiver may be arranged to determine the reduced reserved power level depending on a current operational mode/power extraction mode for the power receiver. The power receiver may be arranged to determine the reduced reserved power level depending on a current amount of power being extracted from the power transfer signal. The power receiver may be arranged to determine the reduced reserved power level depending on an expected future amount of power being extracted from the power transfer signal. The power receiver may be arranged to determine the reduced reserved power level as a lowest power level for which a required power transfer operation for the power receiver can be performed.

In some embodiments, the power receiver may be arranged to receive the power reservation change request, determine the reduced reserved power level, and transmit the modified reserved power level request during a connected and/or standby phase. In some embodiments, the power receiver may be arranged to receive the power reservation change request, determine the reduced reserved power level, and transmit the modified reserved power level request during a power transfer phase.

In some embodiments, the power reservation controller may be arranged to transmit a rejection response to the power reservation change request in response to determining that a reduced reserved power level lower than the currently reserved power level is not acceptable/does not enable a power transfer sufficient to support a required operation/function. The rejection may be transmitted as a different message or may be transmitted as a modified reserved power level request, for example by this requesting a reserved power level not less than the currently reserved power level.

According to another aspect of the invention, there is provided a method of operation for a wireless power transmitter apparatus for wirelessly providing power to multiple power receivers via inductive power transfer signals, the method comprising: a plurality of power transfer coils generating the power transfer signals; generating drive signals for the plurality of power transfer coils to generate the power transfer signals; communicating with multiple power receivers; determining reserved power levels for power transfer to power receivers; controlling the driver circuit to constrain power levels of the drive signals to not exceed reserved power levels; wherein determining reserved power levels include in response to receiving the power reservation request performing the steps of: determining a combined reserved power level being a combined level of at least the first reserved power level and reserved power levels for a set of supported power receivers comprising power receivers other than the first power receiver for which a power level is reserved; comparing the combined reserved power level to a maximum power level threshold; transmitting a power reservation change request to a first supported power receiver being a power receiver of the set of supported power receivers if the combined reserved power level exceeds the maximum power level threshold; and reserving a reserved power level for the first power receiver, the reserved power level for the first power receiver being determined in dependence on a response to the power reservation change request received from the first supported power receiver.

According to another aspect of the invention, there is provided a method of operation for a power receiver wirelessly receiving power from a power transmitter via an electromagnetic power transfer signal, the power receiver comprising: an inductive power extraction element arranged to extract power from the power transfer signal; a communication unit arranged to communicate with the power transmitter; and a power reservation controller arranged to request reserved power levels from the power transmitter, a reserved power level being a guaranteed power level for a power transfer; wherein the method comprises: receiving a power reservation change request from the power transmitter, determining, in response to receiving the power reservation change request from the power transmitter, a reduced reserved power level being a lower reserved power level than a currently reserved power level, and transmitting a modified reserved power level request to the power transmitter, the modified reserved power level request being a request for a change of the currently reserved power level to the reduced reserved power level.

There is provided a wireless power transfer system comprising a power transmitter and a power receiver in line with the above.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of elements of a power transfer system in accordance with some embodiments of the invention;
FIG. 2 illustrates an example of elements of a power transmitter apparatus in accordance with some embodiments of the invention;
FIG. 3 illustrates an example of elements of a power receiver in accordance with some embodiments of the invention; and
FIG. 4 illustrates an example of elements of a power transmitter apparatus in accordance with some embodiments of the invention.

### DETAILED DESCRIPTION OF THE EMBODIMENTS

The following description focuses on embodiments of the invention applicable to a wireless power transfer system utilizing a power transfer approach such as known from the Ki specification. However, it will be appreciated that the invention is not limited to this application but may be applied to many other wireless power transfer systems.

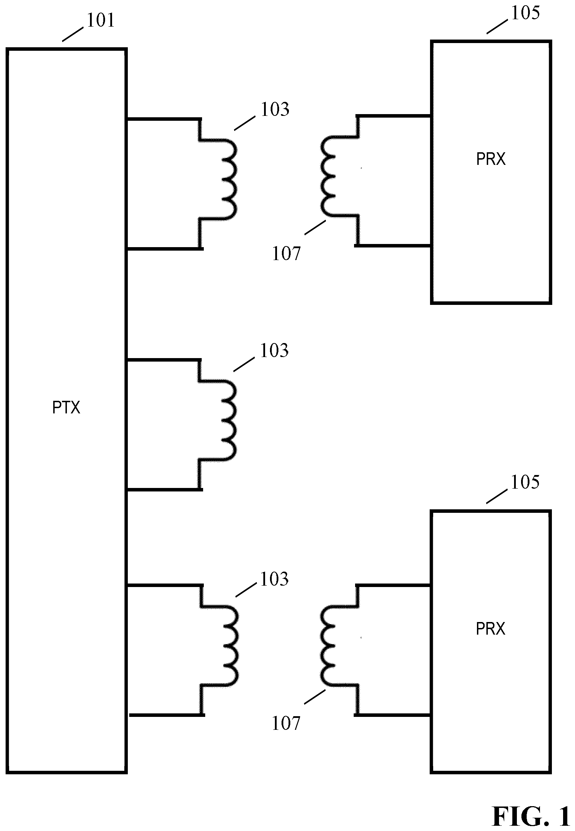

FIG. 1 illustrates an example of a power transfer system in accordance with some embodiments of the invention. The power transfer system comprises a power transmitter apparatus 101 (also for brevity referred to simply as a power transmitter) which includes (or is coupled to) a plurality of transmitter coils/inductors 103. The system further comprises a number of power receivers 105 which includes (or is coupled to) a receiver coil/ inductor 107.

The system provides an electromagnetic power transfer signal from each of the power transfer coils 103. Each power transfer signal may inductively transfer power from the power transmitter 101 to a power receiver 105. Specifically, for each power transfer coil 103, the power transmitter 101 can generate an electromagnetic signal, which is propagated as a magnetic flux by the transmitter coil or inductor 103. Each power transfer signal may correspond to the electromagnetic power transfer component representing the energy transfer from the power transmitter to one power receiver, and may be considered to correspond to the component of the generated electromagnetic field that transfers power from the power transmitter to the power receiver. For example, if there is no loading of the receiver coil 107, no power will be extracted by the power receiver from the generated electromagnetic field (apart from losses). In such a scenario, the driving of the transmitter coil 103 may generate an electromagnetic field of potentially high field strength but the power level of the power transfer signal will be zero (apart from losses). In some situations, where a foreign object is present, the power transfer signal may be considered to include a component corresponding to the power transfer to the foreign object, and thus the power transfer signal may be considered to correspond to the power being extracted from the electromagnetic field generated by the power transmitter.

The power transfer signal may typically have a frequency between around 20 kHz to around 500 kHz, and for Ki compatible systems typically in the range between 20kHz to 80kHz. The transmitter coils 103 and the power receiving coils 107 are loosely coupled and thus each power receiving coil 107 picks up (at least part of) a power transfer signal generated by the power transmitter 101. Thus, the power is transferred from the power transmitter 101 to a power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receivers 105 are specifically power receivers that receive power via a receiver coil 107. However, in other embodiments, a power receiver 105 may comprise a metallic element, such as a metallic heating element, in which case the power transfer signal directly induces eddy currents resulting in a direct heating of the element. The power receiver may accordingly provide a load to the power transfer signal by comprising an inductive power extraction element which specifically may be a power extraction coil or an electrical (e.g. heating) element in which current is induced by the power transfer signal.

The system is arranged to transfer substantial power levels, and specifically the power transmitter may support power levels in excess of 50W, 100W, 500W, or 1 kW. For example, for Ki type applications, the power transfers may often be in excess of 100 W, and may be up to more than 2500W for very high power applications.

In the following, the operation of the power transmitter 101 and the power receiver 105 will be described with specific reference to an embodiment generally in accordance with the Specifications (except for the herein described (or consequential) modifications and enhancements) being developed by the Wireless Power Consortium. In particular, the power transmitter 101 and the power receiver 105 may follow, or substantially be compatible with, elements of the Ki Standards.

Many wireless power transfer systems, and in particular high power systems such as Ki, utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

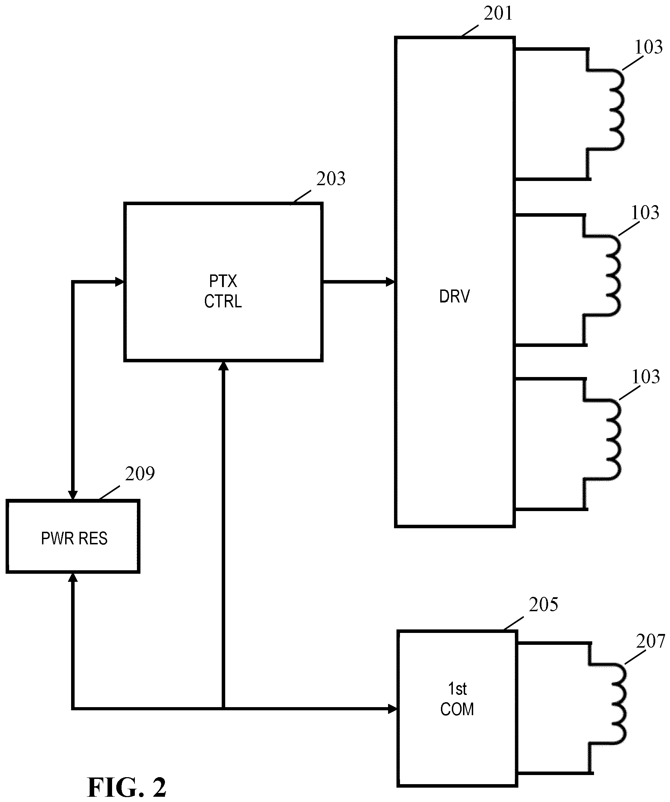

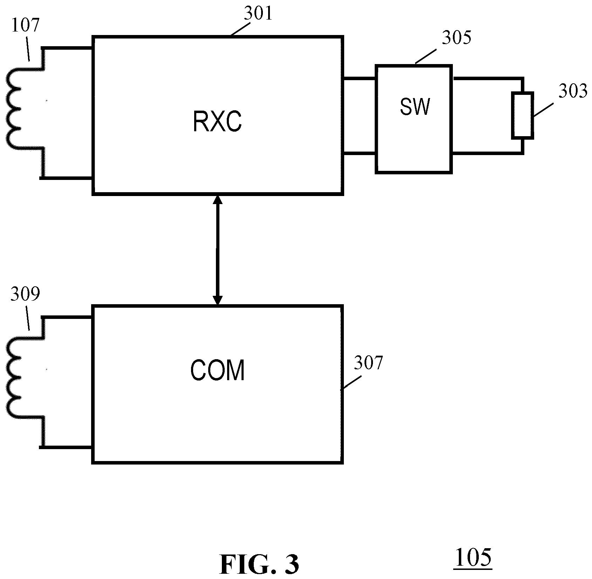

FIG. 2 illustrates elements of the power transmitter 101 and FIG. 3 illustrates elements of the power receiver 105 of FIG. 1 in more detail.

The power transmitter 101 includes a driver 201 which can generate drive signals that are fed to the transmitter coils 103 which in return generate the electromagnetic power transfer signals that provide power transfer to the power receivers 105. The power transfer signals are (at least) provided during power transfer time intervals of the power transfer phase.

The driver 201 may typically comprise output circuits in the form of an inverter, typically formed by driving a full or half bridge as will be well known to the skilled person.

The power transmitter 101 further comprises a power transmitter controller 203 which is arranged to control the operation of the power transmitter 101 in accordance with the desired operating principles. Specifically, the power transmitter 101 may include many of the functionalities required to perform power control in accordance with the Qi or Ki Specifications.

The power transmitter controller 203 is in particular arranged to control the generation of the drive signals by the driver 201, and it can specifically control the power levels of the drive signals, and accordingly the level of the generated power transfer signals. The power transmitter controller 203 comprises a power loop controller for each power transfer coil 103/power transfer signal. A power loop controller for a given power receiver/power transfer signal controls a power level of the power transfer signal in response to the power control messages received from the power receiver 105 during the power transfer phase. The operation of the power transmitter controller 203, and in particular the power transfer operations, is in general dependent on the communication between the power transmitter and the power receiver.

In order to receive data and messages from the power receiver 105, the power transmitter 101 comprises a communicator 205 which is arranged to receive data and messages from the power receivers 105 as well as to transmit data and messages to the power receivers 105 (as will be appreciated by the skilled person, a data message may provide one or more bits of information).

In the specific example, the communication is performed by modulation of a communication carrier signal that is generated by a first communication coil 207. The first communicator 205 specifically comprises a driver/output circuit which is coupled to the first communication coil 207 and which generates a communication drive signal that is fed to the first communication coil 207 to generate the communication carrier signal. The first communicator 205 may typically be arranged to generate the communication drive signal/communication carrier signal to have a substantially different frequency than the power transfer drive signal/ power transfer signal. In many embodiments, the frequency of the communication carrier signal may be no less than 10, 100, or 500 times higher than the frequency of the power transfer signal. In many embodiments, the frequency of the communication drive signal/ communication carrier signal may have a frequency of no less than 500kHz, 1 MHz, or 10 MHz. Specifically for an NFC implementation, the communication carrier signal frequency may be 13.56 MHz.

Although, FIG. 2 shows an example where the power transmitter comprises a single communication coil 207 which is arranged to communicate with a plurality of different power receivers, it may in many embodiments include a plurality of communication coils 209 and specifically may include a communication coil 209 for each transmitter coil 103 and thus for each power transfer signal that can be generated and for each power receiver that can be (simultaneously) supported. Further, in many embodiments, the first communicator 205 may include repeated functionality for each of such transmitter coils 103, and specifically may include full NFC communication functionality for each transmitter coil 103/each transmitter coil 103/ each power receiver that can be supported.

The first communicator 205 is arranged to modulate the communication drive signal(s)/ communication carrier signal(s) in order to transmit data to the power receivers (in the following references to the communication drive signal also include the implicit reference to the communication carrier signal as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

In some embodiments, the first communicator 205 may for example receive data to be transmitted to a given power receiver from the power transmitter controller 203 and in response generate the corresponding communication drive signal to have corresponding amplitude variations.

For communication from the power receiver to the power transmitter, the modulation of the communication drive signal may be a load modulation. The power receiver may be arranged to modulate the communication carrier signal by varying a loading of the communication carrier signal generated by the first communication coil 207 in accordance with the data to be transmitted. The first communicator 205 may be arranged to sense variations in the voltage and/or current of the first communication coil 207 (e.g. for each power receiver) and to demodulate the load modulation based on these. The skilled person will be aware of the principles of load modulation and therefore these will not be described in further detail.

In many embodiments, the communication may be in accordance with the Near Field Communication, NFC, Specifications and the power receiver may specifically include NFC functionality. In many embodiments, the first communicator 205 and first communication coil 207 may implement (at least) the functionality of one or more NFC readers. Thus, in many embodiments, the communication drive signal! communication carrier signal is a constant level (except for modulation) 13.56 MHz signal.

In many embodiments, the first communicator 205 may comprise a bi-directional NFC communicator for each transmitter coil 103/power transfer/supported power receiver.

FIG. 3 illustrates some exemplary elements of one of the power receivers 105.

The receiver coil 107 is coupled to a power receiver controller 301 which couples the receiver coil 107 to a load 303 via a switch 305 (i.e. it is a switchable load 305). The power receiver controller 301 includes a power control path which converts the power extracted by the receiver coil 107 into a suitable supply for the load 303. In addition, the power receiver controller 301 may include various power receiver controller functionality required to perform power transfer, and in particular functions required to perform power transfer in accordance with the Qi or Ki Specifications.

In the example, the power receiver 105 comprises a receiver coil 107 which extracts power and feeds it to an electric load 303. However, in other embodiments, the power transfer signal may directly induce energy in the load, such as e.g.. by causing eddy currents in a heating element. In such cases, the power receiver may further comprise control functionality for supporting the power transfer with the functionality being powered by extraction of power from the power transfer signal (i.e. a receiver coil 107 may be provided in addition to the heating element in order to extract power for the control circuitry/functionality). In some such embodiments, power may alternatively or additionally be extracted from the communication carrier.

In order to support communication from the power receiver 105 to the power transmitter 101 the power receiver 105 comprises a second communicator 307 and a second communication coil 309. The second communication coil 309 is arranged to couple to the first communication coil 207 and thus the communication carrier signal induces a current (at least an emf) in the second communication coil 309.

The second communicator 307 is coupled to the second communication coil 309 and is arranged to determine amplitude variations in the induced signal and to demodulate amplitude modulations of the communication carrier signal. Thus, the second communicator 307 is arranged to decode data transmitted from the power transmitter by amplitude modulation of the communication carrier signal. It will be appreciated that in other embodiments, the second communicator 307 may be arranged to decode data modulated onto the communication carrier signal using other modulation formats such as frequency or phase modulation.

The second communicator 307 is further arranged to load modulate the communication carrier signal in order to transmit data from the power receiver to the power transmitter. Specifically, the second communicator 307 may comprise a load (such as a capacitor) which depending on the data to transmit can be switched between being coupled to the second communication coil 309 and not being coupled to the second communication coil 309. These load modulations may then be detected by the first communicator 205 of the power transmitter.

In the specific example, the second communication coil 309 and the second communicator 307 may provide NFC compatible communication operation. Specifically, the second communication coil 309 may be arranged to provide functionality corresponding to an NFC tag and to decode data that has been ASK modulated onto the communication carrier signal in accordance with the NFC specifications.

The power transmitter is accordingly one that can support a plurality of power receivers and simultaneously provide power to more than one load. For example, a power transmitter product can contain multiple power transmitters/coils/modules in a single device/enclosure. For example, multiple kitchen surface power locations may supported by a single device having multiple power transmitter coils thereby providing simultaneous power to e.g. kettles, pans, blenders etc. Having a single device providing multiple power transfer outlets may often be a cost-effective solution as many components and functions can be shared. For example, a single mains/power input filter can be used.

A key critical performance measure for wireless power transfer is clearly that the desired amount of power can be provided to the power receiver. This is a difficult challenge as the characteristics and requirements of different power receivers can vary by a huge amount. It is further exacerbated by the requirements for a given power receiver possibly varying substantially with time. For example, the difference in power extracted by e.g. a kettle being wirelessly powered is substantially different between standby times and heating times, indeed the difference may be several orders of magnitude (say the difference between a standby power consumption of 10mW during standby to, say, 2kW during heating).

The issue is further complicated in situations where multiple power transfer signals are generated to support multiple power receivers. In such cases, the number of power receivers may also vary and typically there are limited resources which must be shared between the active devices. For example, a multi-position hub will typically have single power connection with a limit on the total power that can be provided. For example, in domestic applications, a hub may be powered by a single fused main connection with a maximum current and thus power level. In other situations, thermal designs and restrictions may provide a limit on the total power that can be provided simultaneously.

As a specific example, some power transmitter modules can e.g. be combined within a cooktop, sharing the input power with multiple receivers and cookware. The heating or power provision constraints may result in an overall maximum available power that cannot be exceeded. However, the total power per transmitter coil and/or inductive cooking zone is often significantly higher than the maximum possible input power from the mains, and therefore the power sharing between the different power transfer signals and power receivers must be carefully managed.

In the described system, power sharing is based on power being reserved for the different power receivers/power transfer signals. Rather than just considering the actual and current power levels of the active power transfer signals, the power transmitter is arranged to base the power sharing on reservation of power for the different power transfer operations.

In particular, the power transmitter comprises a power reserver 209 which is arranged to determine reserved power levels for power transfer to power receivers that are supported by the power transmitter. In the example, each transmitter coil 103 of the power transmitter may support one power receiver, i.e. it may support one power transfer and generate one power transfer signal for one power receiver. In the approach, whenever a new power receiver is detected, or possibly when a new power transfer request is received from an already detected power receiver, the power transmitter and associated power receiver may proceed to start an initialization/setup phase which includes the power reserver 209 reserving power for the power receiver. This may result in the power reserver 209 determining a reserved power level for the power receiver.

The power reserver 209 is coupled to the first communicator 205 and to the power transmitter controller 203 and provides information to the power transmitter controller 203 on the determined reserved power level for the different power transfers. The power transmitter controller 203 is then arranged to control the driver 201 to constrain the power levels of the drive signals to not exceed the reserved power levels for the respective power receivers. Thus, the system is arranged to constrain the power levels of each power transfer signal/power transfer so that it does not exceed the reserved power level for that power transfer signal/power transfer.

The reserved power level for a given power receiver may thus be a maximum power level that can be provided to/is guaranteed for the power receiver. It is in many embodiments a maximum power level for the drive signal for the power receiver.

The actual power level of the drive signal may be varied dynamically as long as it does not exceed the maximum level of the reserved power level. The power transmitter may implement a power control loop for each power receiver/power transfer so that the power level is dynamically adapted for the current conditions and requirements of the individual power receiver operation.

The approach allows an efficient sharing of available power between the different power transfer paths, and in particular allows the power transmitter to ensure that all active power transfer operations can be sufficiently supported. It allows the power receiver to be able rely on the availability of the reserved power and it may accordingly prevent erroneous and unreliable operation due to a potential lack of power.

The power reserver 209 may in response to the first communicator receiving a power reservation request from a given/ power receiver (henceforth referred to as the first or requesting power receiver) proceed to seek to reserve power for this power receiver. The power reservation request comprises a request for a reserved power level. This requested reserved power level may represent the power that the requesting power receiver requests that the power transmitter guarantees to be available to the requesting power receiver. The power receiver may for example select the requested reserved power level as a worst case or maximum power level that it seeks to extract from the power transfer signal generated by the power transmitter.

The power reserver 209 may proceed to determine a combined/total reserved power level which may be determined as the total amount of reserved power if the requested reserved power level is reserved for the requesting power receiver. The combined reserved power can be determined as the combined level of (at least) the first reserved power level and the reserved power levels for a set of supported power receivers where the set of supported power receiver comprises the power receivers for which power is currently reserved (and thus which are currently supported by having the power reserved).

The requesting power receiver may in many cases be a new power receiver that is not currently supported. For example, it may be detected that a new power receiver is positioned close to one of the transmitter coils 103 and this detection may start a setup/negotiation phase which includes the new power receiver transmitting the power reservation request as part of the process. However, in some cases, the power reservation request may be received from a power receiver which is already supported, i.e. for which power is already reserved (and this with an active reserved power level). For example, a currently supported power receiver may switch to a higher power consuming mode and as part of this switch the power receiver may transmit a power reservation request requesting a higher reserved power level than the one currently reserved. In such a case, the currently reserved power level for the requesting power receiver is not included in the determination of the combined reserved power level, i.e. the requesting power receiver is excluded from the set of supported power receivers when determining the combined reserved power level.

The power reserver 209 is arranged to compare the determined combined reserved power level to a maximum power level threshold. The maximum power level threshold may specifically represent the amount of power that is available for sharing between the different power receivers/power transfers. It may be a maximum total amount of power that is available to all the power transfer operations. In many embodiments, the maximum power level threshold may be determined to correspond to the maximum supply power to the power transmitter apparatus.

In many embodiments, the maximum power level threshold may be a static/predetermined threshold that is e.g. manually input during manufacturing or installation of the power transmitter apparatus. In other embodiments, the maximum power level threshold may for example be dynamically determined e.g. dependent on measurements of current operating conditions (such as e.g. a temperature).

If the combined reserved power level is below the maximum power level threshold, the power reserver 209 may proceed to reserve the requested reserved power level for the requesting power receiver. The power reserver 209 may proceed to set a reserved power level for the requesting power receiver to the requested reserved power level in response to a determination that the combined reserved power level is below the maximum power level threshold. The requesting power receiver thus become a supported power receiver and power transfer may be initiated with the requesting power receiver being guaranteed to be provided with power up to the requested reserved power level.

However, if the combined reserved power level exceeds the maximum power level threshold, the power transmitter does not merely take the expected approach of rejecting the request and thus rejecting the desire for power transfer. The power transmitter does not either merely determine a reserved power level that is reduced to whatever amount of power is still available, such as e.g. to the difference between the maximum power level threshold and the reserved power levels of the currently supported power receivers.

Rather, the power transmitter of FIG. 1 proceeds to transmit a power reservation change request to one (and potentially more than one) of the supported power receivers. The power receiver to which the power reservation change request is transmitted is a power receiver for which power has currently been reserved and it will also be referred to as the first supported power receiver or the requested supported power receiver. The power reservation change request is a request for first supported power receiver to change, and specifically reduce/lower, the reserved power level for the first supported power receiver.

In response to receiving the power reservation change request, the first supported power receiver may proceed to evaluate the request and to generate a response to the request. For example, the first supported power receiver may transmit a response which specifically accepts or rejects the request. As another example, the first supported power receiver may transmit a new reserved power level request with a modified, and typically reduced, reserved power level. In some embodiments, the transmission of the power reservation change request to the first supported power receiver may start a negotiation or configuration process which includes a number of interactions and message exchanges between the power transmitter and the first supported power receiver. Thus, the response from the first supported power receiver may include a plurality of messages and may include an adaptive process. Such a negotiation/configuration phase may include configuration of other operating parameters (e.g. to adapt to a different guaranteed reserved power level).

The first supported power receiver may accordingly receive a power reservation change request from the power transmitter and in response it may proceed to generate a response indicating whether a reduced reserved power level can be accommodated or not.

The first supported power receiver may determine a suitable reduced reserved power level which is a lower reserved power level than the currently reserved power level for the first supported power receiver. For example, the first supported power receiver may in response to receiving the power reservation change request proceed to (re)evaluate the expected power extraction level for the current operational mode. For example, if the first supported power receiver is currently in a standby mode, it may proceed to set the reduced reserved power level to a level which is sufficient to support standby mode but not a full operational mode. As another example, the first supported power receiver may determine the reduced reserved power level as a level that will support some operational modes but not other modes (e.g. it may support lower level of heating or slower speeds and thus provide a slightly reduced operation).

The first supported power receiver may then proceed to transmit a modified reserved power level request to the power transmitter with the modified reserved power level request including a request for the power transmitter to reserve a reserved power level corresponding to the reduced reserved power level, i.e. it is a request for a new and lower level of the reserved power level for the first supported power receiver.

In some cases, the modified reserved power level request may simply be a predetermined message with this message inherently indicating a request for a given reduced reserved power level. In other embodiments, the modified reserved power level request may include data that explicitly indicates the reduced reserved power level.

In case the first supported power receiver determines that it is not acceptable/possible to reduce the reserved power level, it may transmit a response to the power reservation change request which is a rejection of the request. This may for example be a dedicated rejection message or may e.g. be a modified reserved power level request which indicates a reduced reserved power level which is the same or higher than the reserved power level currently reserved for the first supported power receiver.

The power reserver 209 is arranged to proceed to reserve/determine a reserved power level for the requesting power receiver with the reserved power level for the first power receiver being determined in dependence on the response to the power reservation change request from the first supported power receiver, i.e. specifically in response to the modified reserved power level request/the reduced reserved power level. The reserved power level for the requesting power receiver, which will also henceforth be referred to as the allocated reserved power level, may specifically be determined such that the combined reserved power level determined when including the allocated reserved power level instead of the requested reserved power level does not exceed the maximum power level threshold, and specifically it may be selected to be equal to the maximum power level threshold (or to a specific value with a predetermined difference/offset to the maximum power level threshold).

Thus, if the response from the first supported power receiver is a rejection of the request to change the reserved power level for the first supported power receiver, the power reserver 209 may proceed to determine the allocated reserved power level as the remaining margin or may simply reject the request (equivalent to the allocated reserved power level being set to zero). However, if the response from the first supported power receiver results in a reduced reserved power level for the first supported power receiver, the allocated reserved power level can be increased corresponding to the reduction. In particular, if the reduced reserved power level is sufficient, the allocated reserved power level can be set to the requested reserved power level.

In addition to setting a new allocated reserved power level for the requesting power receiver in dependence on the response, the power reserver 209 may further adapt the reserved power level for the first supported power receiver. For example, the reserved power level for the first supported power receiver may be set to a new level which is requested by the first supported power receiver (i.e. the reduced reserved power level) in the response to the power reservation change request. As another example, the reserved power level may be set to the maximum level that does not result in the combined reserved power level exceeding the maximum power level threshold (e.g. in case where this level exceeds the new requested reserved power level but is lower than the previous reserved power level for the first supported power receiver). In some embodiments, a negotiation process between the power transmitter and the first supported power receiver may be performed resulting in a new reserved power level for the first supported power receiver.

The power transmitter of FIG. 2 is thus not merely arranged to reserve power for individual power transfers and power receivers and to ensure that the reserved power does not exceed an available power level, but is further arranged to dynamically change/renegotiate previously assigned reserved power levels in order to potentially reach a more optimal power sharing. It may often allow support of new power transfers that otherwise could not be supported.

The approach may allow an improved operation in many cases. For example, when a power receiver, such as a pan, kettle, blender or similar kitchen appliance, is positioned on the power transmitter apparatus for wireless power transfer, it can request a certain amount of power. However, if the available power is limited due to a reservation by another power receiver (such as another appliance), the newly placed power receiver may not be able to be provided with the desired or required power. However, rather than rejecting the power transfer for this new appliance, the power transmitter apparatus may instead initiate communication/re-negotiation with the previous appliance. This can explore whether a reconfiguration/reservation of power is feasible that may allow the new appliance to be supported. Specifically, the previous device can be requested if it still needs the full amount of power that it has reserved. If not, this value can be lowered, to get enough power available for the new appliance. If the previous device still needs the full amount of power, it can decline the negotiation.

This may in many cases result in an improved operation and user experience. The approach is in particular highly suitable for many practical applications where the power receivers may be arranged to operate in different operational modes with different power requirements, such as a blender which may have very different power requirements when operating e.g. in a mode, a slow speed mode, a high speed mode, etc. The initial power negotiation for a power receiver often takes all possible load configurations into account, and therefore the maximum possible power extracted by the power receiver must be reserved by the power transmitter apparatus. However, the power receiver does not always use the full reserved power, and indeed for many power receiver devices, the maximum power level may only rarely be needed.

However, when placing another power receiver for power transfer (e.g. another appliance being placed on an available transmitter/cooking zone of a multi-transmitter product), the available power may be limited due to the reserved power of the previous power receiver even if this is not actually using (anything near) the reserved power. In the current approach, this does not lead to a rejection of the power transfer request by the new power receiver but instead results in a process that seeks to reduce the previously reserved power level for the previous power receiver in order for the power transmitter to accommodate the new power receiver.

A very specific illustrating example may be a two-burner induction hob with a maximum power of 3.6kW (i.e. two power transfer locations are provided with a transmitter coil supporting each location). A burner may e.g. be capable of supplying a pan with induction heating, but may also be capable of powering a Ki power receiver. When the Ki power receiver is placed on the burner, the power transmitter proceeds to reserve a certain amount of power. In case a 2.2kW kettle is positioned on the burner, the power transmitter may reserve 2.2kW from the combined total power budget for the power transmitter. The kettle may start boiling the water, which may typically take a few minutes. The same kettle can also provide a "keeping warm" function, which keeps the water at a certain pre-determined temperature, thus needing a lot less power than when heating up water. This may for example be 200W. Accordingly, when the kettle is used for the "keeping warm" function, it will extract around 200W but have a reserved power level of 2.2kW.

If a pan is then placed on the other burner, there is only 1.4kW available to use (3.6kW-2.2kW), while the actual available power is 3.4kW (3.6kW-200W). This may for example mean that for the pan e.g. only settings 1-6 of 10 power settings may be supported despite the required power in principle being available. The power transmitter may accordingly proceed to initiate a (re)negotiation with the kettle. For example, the power transmitter may detect that for some time only 200W out of the reserved 2.2kW are being extracted. The power transmitter may request the kettle power receiver to reduce the reserved power to a level where the available power for the pan enables its full functionality, such as e.g. allow all ten power settings to be supported. The kettle power receiver may recognize that it only uses the 200W and when the power transmitter requests a reduction of the reserved power level to 1.2kW (3.6kW-2.4kW), the kettle power receiver accepts and continues normal operation. This allows the full power needs of the pan to also be met.

If the kettle subsequently needs the full 2.2kW power, it may transmit a request for the reserved power level to be increased again. The power transmitter may then proceed to modify the reserved power levels in accordance with a suitable conflict/resource allocation algorithm. For example, typically, the devices may be associated with a priority and the allocation may be in order of priority. For example, often the priority will be for the Ki power receiver/kettle over a passive heating pan element. Accordingly, the kettle will have the full 2.2kW reserved and with the pan only having 1.4kW reserved.

A particular advantage of the current approach is that centralized reservation and management of power can be performed with the system being capable of dynamically rearranging the reserved power levels for the different power receivers. However, the approach still enables the power receivers to be in control of the power transfer and the power reserved for the power transfers to the individual power receivers. The approach may thus allow the power receivers to control and interact (via the power transmitter) to provide improved power reservation and sharing of resource.

The requesting power receiver and/or one or more of the supported power receivers may operate and perform the described power reservation approach while being in an active power transfer phase. In many embodiments, and scenarios, the requesting power receiver and/or one or more of the supported power receivers may operate and perform the described power reservation approach while being in a standby and/or connected phase/mode.

Specifically, for a Ki wireless power transfer system, the power transmitter and power receiver may enter a connected phase in which the power transmitter and power receiver communicate to prepare for transition to the power state. In particular power negotiation is performed and other parameters may be shared between transmitter and receiver. In this phase, a user can typically use the user interface of the power receiver to select settings or to switch the device on. During such a connected phase, the requesting power receiver may transmit the first power reservation request to the power transmitter. Similarly, the power transmitter may transmit the reservation change request to a supported power receiver which is in the connected phase, and indeed may specifically select the supported power receiver to which the reservation change request is transmitted as one that is in the connected phase.

Similarly, in some embodiments, the power transmitter and power receiver may operate in a standby phase in which power extraction and operation is minimized/ reduced. Specifically, the power transmitter and power receiver may be Ki compatible devices that are arranged to enter a Ki standby phase. During such a connected phase, the requesting power receiver may transmit the first power reservation request to the power transmitter. Similarly, the power transmitter may transmit the reservation change request to a supported power receiver which is in the standby phase, and indeed may specifically select the supported power receiver to which the reservation change request is transmitted as one that is in the standby phase.

The acceptable or desired reserved power levels may in many embodiments be determined automatically by the involved power receivers, e.g. based on predetermined algorithms or settings. For example, the pan and/or kettle may be arranged to first request reserved power levels for optimum performance but also be arranged to accept lower reserved power levels (and thus restricted operation) if specifically requested (e.g. depending on the current operational mode). In some embodiments, the determination of acceptable or desired reserved power levels may be in response to a user input. For example, the user may in some cases be arranged to input an acceptable service level, and the power receiver may determine a minimum required reserved power level to guarantee this acceptable service level. In some cases, the first supported power receiver may for example in response to the power reservation request proceed to obtain a user input indicating whether this is acceptable or not. For example, a kettle or pan may generate a user display requesting the user to accept or not a reduced service level (e.g. a reduced maximum heating level). The user may then manually accept or reject this, and the device may proceed to respond to the power reservation request to reflect whether the request is accepted or rejected.

It will be appreciated that the power reserver 209 may be arranged to set the reserved power levels for the requesting power receiver and the first supported power receiver in accordance with any suitable algorithm and desired operation.

For example, in some embodiments, the power reserver 209 may be arranged to give priority to the first supported power receiver, i.e. to existing power transfer setups. In such a case, the power reserver 209 may be arranged to set the reserved power level for the first supported power receiver to a level requested by the first supported power receiver in response to the power reservation change request being received. Thus, the first supported power receiver may request a modified reserved power level, or indeed may request that the current reserved power level is maintained. The power reserver 209 may proceed to reserve this power level regardless of the request from the requesting power receiver and thus the first supported power receiver is guaranteed to be provided with the requested power if needed. The power reserver 209 may then proceed to set the reserved power level for the requesting power receiver to a level such that a resulting total combined reserved power level is below the maximum power level threshold. Thus, if, after a potential modification of the reserved power level for the first supported power receiver, the full requested reserved power level can be allocated without the combined reserved power level exceeding the maximum power level threshold, then the power reserver 209 will do so, and otherwise it may allocate the maximum reserved power level that is possible without exceeding the maximum power level threshold.

In other embodiments, the power reserver 209 may be arranged to give priority to new reserved power level requests. In such a case, the power reserver 209 may be arranged to allocate the requested reserved power level up and until the maximum power level threshold for the combined reserved power level when calculated without including the reserved power level from the first supported power receiver. It may then proceed to determine the amount of power still available for reservation and determine if this is sufficient to allow the new reserved power level requested from the first supported power receiver. If so, the first supported power receiver is allocated this new reserved power level and otherwise e.g. the maximum available power reservation may be allocated to the first supported power receiver, or e.g. the request may be rejected (e.g. resulting in the ongoing power transfer to the first supported power receiver being terminated or reduced).

In some embodiments, the priority between different power receivers may be varied, e.g. by user selection or applying specific rules or algorithms for assigning priorities to the power receiver. The power reserver 209 may then be arranged to assign reserved power levels to the power receivers in order of priority.

For example, in some embodiments, a new power reservation change request may be detected to result in a combined reserved power level exceeding the maximum power level threshold. This may in some cases instigate a process of re-allocating reserved power levels to one, more, or all of the power receivers. The process may start with the power transmitter interacting with one, more, or possibly all of the power receivers to request whether the currently reserved power level can be reduced. Based on the results, the receive power estimate may then proceed to reserve power in order of priority with each power receiver being reserved/allocated the (new) reserved power level.

In some embodiments, the first supported power receiver, i.e. the (next) power receiver to which the power reservation change request is transmitted, and from which the reduction of reserved power level is requested, may in some cases be random. However, in many cases, the power transmitter may apply a specific approach or criteria for selecting the specific first supported power receiver. It will be appreciated that the exact selection criteria and algorithm will depend on the preferences and requirements of the individual embodiment.

For example, in many embodiments, the power reserver is arranged to select the first supported power receiver in dependence on a power level of a drive signal for the first supported power receiver.

For example, the power reserver 209 may be arranged to transmit the power reservation change request to the power receiver which has the lowest current and/or historic power extraction. For example, the power receivers for which power is currently reserved may be ordered in order of their actual consumed power and the power reserver 209 may be arranged to select power receiver(s) to request to reduce the reserved power level in the order of increasing consumed power. It is in many embodiments likely that such an approach will result in a selection of a power receiver which is currently in standby mode, and which thus is most likely to not require the reserved power level that has been reserved for it. It may allow a selection of power receivers in order of which they are most likely to be willing to reduce their reserved power level.

In some embodiments, the power reserver is arranged to select the first supported power receiver in dependence on a reserved power level for the first supported power receiver.

For example, the power reserver 209 may be arranged to transmit the power reservation change request to the power receiver which has the highest reserved power level. For example, the power receivers for which power is currently reserved may be ordered in order of their reserved power level and the power reserver 209 may be arranged to select power receiver(s) to request to reduce the reserved power level in decreasing order of the reserved power level. It is likely that such an approach will result in a selection of a power receiver which is most likely to able to allow a substantial reduction of power. It may allow a selection of power receivers in order of which are most likely to be willing to reduce their reserved power level.

In many embodiments, the power reserver 209 is arranged to select the first supported power receiver in dependence on the power level of the drive signal for the first supported power receiver in comparison to the reserved power level for the first supported power receiver.

For example, the power reserver 209 may be arranged to transmit the power reservation change request to the power receiver which has the highest difference between the reserved power level and the actual extracted power (specifically the power of the drive signal). For example, the power receivers for which power is currently reserved may be ordered in order of the difference between the reserved power level and the actual power level of the drive signal (e.g. current, average, historic power level). The power reserver 209 may then select power receiver(s) to request to reduce the reserved power level in decreasing order of the difference. The approach may thus result in an approach where the supported power receivers are requested to reduce their reserved power level depending on how much of the reserved power they are actually using. It is in many scenarios likely that such an approach will result in a selection of a power receiver which is most likely to able to allow a reduction of power without it significantly impacting operation.

In many embodiments, the power receiver may be selected based on the current power extraction and specifically based on the power level of the drive signals for the supported power levels. Alternatively or additionally, the power reserver 209 may consider historic values of the drive signal power levels. Thus, in many embodiments, the power reserver may select the first supported power receiver in dependence on the power level of the drive signal(s) during a time interval prior to communication unit receiving the power reservation request from the first power receiver (101).

For example, the power transmitter controller 203 may continuously monitor the power levels of the drive signals and e.g. determine the average power level (e.g. measured as a current and/or voltage of the drive signal or a signal related to/dependent thereon) over a given time window, such as during a time interval that in many embodiments may have a duration of no less than 100msec, 1 sec, 10sec, 100 sec, or 5 minutes. When selecting from which supported power receiver to request a reduction of the allocated reserved power level, the power reserver 209 may then consider these values and e.g. use the above described approach/criteria (e.g. select the one with the lowest historic power consumption or the one with the biggest difference between actual and reserved power levels). The historic values may often provide a more accurate indication of the current operation by the supported power receiver(s) and may increase the likelihood that a supported power receiver is selected which can reduce the reserved power level.

In many embodiments, the power transmitter may be arranged to transmit an indication of the desired change in the reserved power level for the first supported power receiver to the first supported power receiver. The indication may for example typically be transmitted in the power reservation request (message) itself.

For example, in some embodiments, the power transmitter may when a new power reservation request is received proceed to determine a combined reserved power level being the combination of this requested reserved power level and the reserved power levels that have already been reserved. If this combined reserved power level exceeds the maximum power level threshold, the power reserver 209 may proceed to determine by how much the threshold is exceeded. For example, if the maximum power level threshold is 3kW and there is currently 2.5kW reserved by supported power receivers, a new power reservation change request for 1kW results in a combined reserved power level of 3.5kW which exceeds the maximum power level threshold of 3kW by 500W. The power reserver 209 may then include this value in the power reservation change request transmitted to the first supported power receiver. Thus, rather than merely requesting a reduction in the reserved power level for the first supported power receiver, the power transmitter may specifically request the power level reduction that is required. The first supported power receiver may then adapt the reserved power level required from the power transmitter in dependence on the requested reduction rather than seek to minimize the reserved power level as much as possible. For example, the first supported power receiver may simply determine whether the request can be accommodated, and if so it may adapt/constrain its operation to the lower reserved power level and transmit an acknowledgement/acceptance message back to the power transmitter which in response proceeds to reduce the reserved power level for the first supported power receiver accordingly while reserving the requested reserved power level to the requesting power receiver. In the specific example, the first supported power receiver may determine whether it is willing to reduce the reserved power level by 500W, and if so it can confirm this to the power transmitter which in response proceeds to reduce the reserved power level for the first supported power receiver by 500W and to reserve 1kW for the requesting power receiver. If the power receiver is not willing to reduce the reserved power level by 500W, it sends a rejection message to the power transmitter. The power transmitter may then proceed, e.g. by rejecting the power reservation change request by the requesting power receiver or e.g. by selecting a new supported power receiver which may then be requested to reduce the reserved power level.

In many embodiments, the power reserver 209 is arranged to transmit power reservation change requests to more than one supported power receivers, and thus in addition to transmitting a power reservation change request to the first supported power receiver, it may also transmit a power reservation change request to a second supported power receiver. In some cases, the power reserver 209 may simply be arranged to (control the first communicator 205 to) transmit the same power reservation change request to all supported power receivers when it is detected that a new power reservation change request is received resulting in the maximum power level threshold being exceeded. In response to the responses, the power reserver 209 may then reallocate reserved power levels, such as e.g. reduce one or more of the reserved power levels for supported power receivers to result in a combined reserved power level below the maximum power level threshold. Indications of the new reserved power levels may then be transmitted to the supported power receiver(s) for which the reserved power level has been changed (or possibly to all supported power receiver(s)).

In other embodiments, a more sequential approach my be used where the transmission of a power reservation change request to a second supported power receiver may be in dependence on the response by the first supported power receiver to the first power reservation change request.

For example, if the total reserved power level that is reserved for the supported power receivers after any potential changes to the reserved power level for the first supported power receiver resulting from the first power reservation change request (and including the reserved power level) exceeds a threshold, which specifically may be the maximum power level threshold, then the receive power estimate may proceed to select a second supported power receiver and transmit a further power reservation change request to this power receiver requesting it to reduce the reserved power level. The power reserver 209 may then proceed to modify the reserved power level for this second supported power receiver in dependence on the response for the second supported power receiver. For example, the same approaches as described for the first supported power receiver may be used for the second supported power receiver (while taking into account that the reserved power level for the first supported power receiver may have been changed).

In some embodiments, the power reserver 209 may proceed to sequentially select supported power receivers and send power reservation change requests to them to reduce their reserved power level. This approach may be repeated until the combined reserved power level is below the maximum power level threshold or until all (appropriate) supported power receivers have been contacted and the power level is set accordingly.

In many embodiments, the process may include time considerations, and specifically in many embodiments, the reserved power level for the first supported power receiver may be temporarily reduced and/or the reserved power level for the requesting power receiver may only be reserved/guaranteed for a given duration/time interval.

In particular, in many embodiments, the power reservation change request can include an indication of a time interval for which the first reserved power level is requested. For example, the power reservation change request may request a reduced power level for a given duration, such as e.g. five or ten minutes. The first supported power receiver may then take this into account in order to determine whether the reserved power level can be reduced. For example, it may accept the reduction in the reserved power level if the time interval is sufficiently small and reject the reduction if the time interval has a longer duration than a given threshold duration.

In many cases, the requested reserved power level may provide an indication of a time interval for which the requested reserved power level is required. For example, a kettle may request a reservation of 2kW for five minutes to reflect that e.g. a boiling of water is a time limited operation that is not likely to be repeated for some time. The power reserver 209 may then proceed to include this in the power reservation change request and if a positive response is received, the power reserver 209 may modify the reserved power level for the first supported power receiver and reserve the requested reserved power level for the indicated time interval.

In some embodiments, the determined/modified reserved power levels may be time limited. This may for example allow a supported power receiver that is running a certain program where it uses less power for a certain period to accept that the reserved power can also be lowered only during that period.

In some embodiments, the maximum power level threshold may be a fixed predetermined threshold that e.g. is set during design and manufacturing of the power transmitter. In some embodiments, the maximum power level threshold may be set by a user or operator using a user interface of the power transmitter. In yet other embodiments, the maximum power level threshold may be a variable threshold that e.g. may be varied due to operational parameters or measurements made during operation.

In some embodiments, the maximum power level threshold may for example be adapted based on the power consumption by another circuit, and in particular based on the power consumption by a circuit that is not dependent on the power levels of the power transfers.

For example, in many embodiments, a supply power may be shared between a number of different circuits. In addition to the power consumption resulting from the direct power transfer by the power transfer signals, there may potentially be substantial amounts of shared power being consumed by other functions. Such functions may for example include control circuits or functions that support the power transfer operation (such as the power supply to the power transmitter controller 203). However, in many embodiments, the circuit may be a circuit that is completely independent and separate from the power transmitter apparatus. For example, the circuit may be one that is sharing a power resource with the power transmitter apparatus but is otherwise separate and independent of the power transmitter apparatus. The shared power resource may for example be a maximum available power supply value, or a maximum power consumption in order to ensure a given thermal reliability (e.g. by ensuring that any temperature increase is limited to acceptable levels).

As a specific example, a single fused power connection may be coupled to provide supply power to both the power transmitter apparatus which e.g. may be a kitchen hub/powered worktop, and a mains outlet to which power consuming devices can be plugged in. In such a case, the power may be shared and thus the power available to the power transmitter apparatus will be dependent on which, if any, device is plugged into the mains outlet.

In some embodiments, the power reserver 209 may comprise functionality for measuring the power consumption of the circuit, e.g. in the specific example the power reserver 209 may measure the power consumed by/provided to any device plugged into the mains plug. It may then proceed to determine the maximum power level threshold for the wireless power transfer power reservation based on the measured power. As a typical example, the power reserver 209 may dynamically determine the maximum power level threshold by subtracting power consumed by other circuits (such as by devices plugged into the mains plug) from a predetermined maximum power level. The resulting power level is thus what remains for the power transmitter apparatus after the deduction of power consumed by other entities. The power reserver 209 may then proceed to share/control power allocations using approaches for reservation of power as previously described.

In many embodiments, the power reserver 209 may be arranged to determine the maximum power level threshold from the maximum power level of the supply power. In some embodiments, the maximum power level of the supply power may for example be manually entered into the power transmitter apparatus during installation or may be a predetermined value stored during manufacturing (e.g. with the power receiver having a prescribed minimum supply power for operation). In many embodiments, the maximum power level threshold may be set directly to the maximum supply power level, although in many embodiments a lower value may be used to ensure a sufficient power margin and e.g. to take into account the power consumption by control and support circuitry of the power transmitter apparatus. In some embodiments, the power reserver 209 may further dynamically determine/reduce the maximum power level threshold to take into account power consumption by other circuits as described above.

In the example of FIG. 2, the power transmitter apparatus is illustrated as having multiple transmitter coils 103 served be a single driver 201, power transmitter controller 203, first communicator 205, and power reserver 209. However, it will be appreciated that in many embodiments, the described and illustrated functionality may be distributed over different entities and with different functions being performed separately and possibly independently.

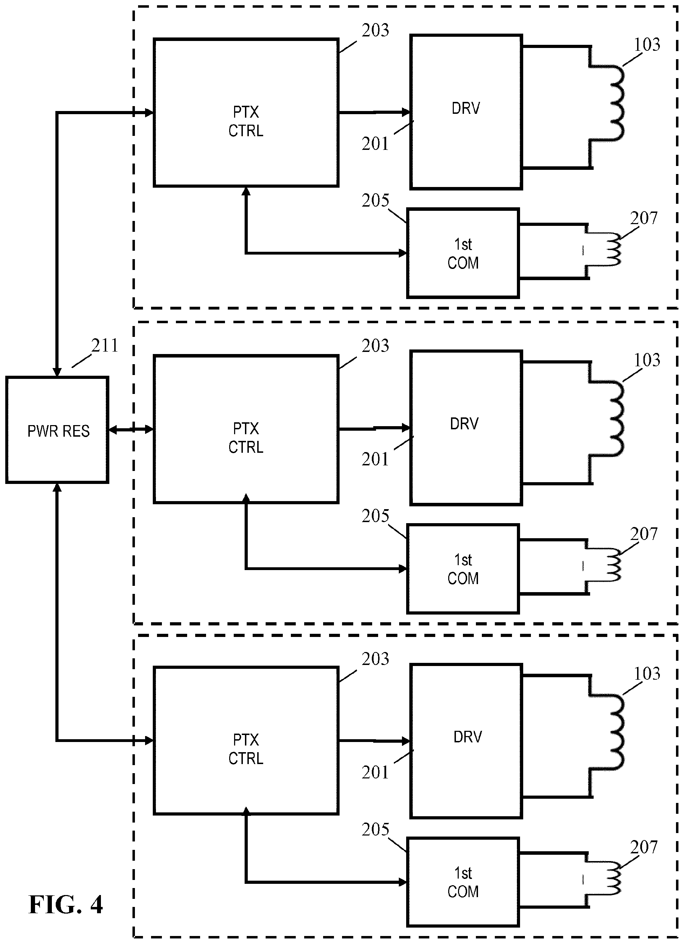

For example, as illustrated in FIG. 4, the functionality may be distributed over multiple parallel power transmitter modules where each module may comprise the full functionality for supporting a single power transfer/power transfer coil. In the example, each power transmitter module includes a transmitter coil 103, a driver 201 for the transmitter coil 103, a power transmitter controller 203, and a first communicator 205. Each module may thus be arranged to fully support a power transfer operation including power transfer initialization, implementing power control loops, terminating power transfer, communicating with a power receiver being provided power etc. Each of the power transmitters/modules may be arranged to perform normal power operations subject to the power level not exceeding a reserved power level for the power transmitter/module.

In order to control the reserved power levels, and thus to allow the different power transmitters/modules to share power, the power transmitter apparatus includes a power reserver 209 that may operate as previously described for the example of FIG. 2. In the example, the power reserver 209 is separate and external to the power transmitters/modules and may communicate with the power transmitters/modules to exchange the required information. For example, the reserved power levels, commands to communicate with the power receivers, data received from the power receivers etc. may be communicated to and from the power transmitters/modules using e.g. a suitable communication link/connection.

In some embodiments, the power reserver 209 may also be distributed over the different power transmitters/modules and e.g. each power transmitter/module may include functionality for supporting the reservation of power. In many such examples, one of the power transmitters/modules may typically be designated as the master and be arranged to perform and track the actual reserved power level for all power receivers, and with the other power transmitters/modules being designated as slaves and merely supporting the power reservation.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

It will be appreciated that the reference to a preferred value does not imply any limitation beyond it being the value determined in the foreign object detection initialization mode, i.e. it is preferred by virtue of it being determined in the adaptation process. The references to a preferred value could be substituted for references to e.g. a first value.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. A wireless power transmitter apparatus (101) for wirelessly providing power to multiple power receivers (105) via inductive power transfer signals, the power transmitter (101) comprising:
a plurality of power transfer coils (103) arranged to generate the power transfer signals;
a driver circuit (201) arranged to generate drive signals for the plurality of power transfer coils (103) to generate the power transfer signals;
a communication unit (205) arranged to communicate with multiple power receivers (105);
a power reserver (209) arranged to determine reserved power levels for power transfer to power receivers;
a controller arranged to control the driver circuit to constrain power levels of the drive signals to not exceed reserved power levels;
wherein
the communication unit (205) is arranged to receive a power reservation request from a first power receiver (105),the first power reservation request comprising a request for a first reserved power level for the first power receiver (105);
wherein the power reserver (209) is in response to the communication unit (205) receiving the power reservation request arranged to:
determine a combined reserved power level being a combined level of at least the first reserved power level and reserved power levels for a set of supported power receivers (105) comprising power receivers other than the first power receiver (105) for which a power level is reserved;
compare the combined reserved power level to a maximum power level threshold;
transmit a power reservation change request to a first supported power receiver (105) being a power receiver of the set of supported power receivers (105) if the combined reserved power level exceeds the maximum power level threshold;
reserve a reserved power level for the first power receiver (105), the reserved power level for the first power receiver (105) being determined in dependence on a response to the power reservation change request received from the first supported power receiver (105).

2. The wireless power transmitter apparatus of claim 1 wherein the power reserver (209) is arranged to modify a reserved power level for the first supported power receiver dependent on the response to the power reservation change request.

3. The wireless power transmitter apparatus of claim 2 wherein the power reserver (209) is arranged to set the reserved power level for the first supported power receiver to a level requested by the first supported power receiver in response to the power reservation change request; and to set the reserved power level for the first power receiver to a level such that a resulting total combined reserved power level is below the maximum power level threshold.

4. The wireless power transmitter apparatus of any previous claim wherein the power reserver (209) is arranged to select the first supported power receiver in dependence on a power level of a drive signal for the first supported power receiver.

5. The wireless power transmitter apparatus of any previous claim wherein the power reserver (209) is arranged to select the first supported power receiver in dependence on a power level of a drive signal for the first supported power receiver during a time interval prior to the communication unit receiving the power reservation request from the first power receiver (105).

6. The wireless power transmitter apparatus of claim 4 or 5 wherein the power reserver (209) is arranged to select the first supported power receiver in dependence on the power level of a drive signal for the first supported power receiver in comparison to a reserved power level for the first supported power receiver.

7. The wireless power transmitter apparatus of any previous claim wherein the power reserver (209) is arranged to select the first supported power receiver in dependence on a reserved power level for the first supported power receiver.

8. The wireless power transmitter apparatus of any previous claim wherein the power reserver (209) is arranged to select the first supported power receiver in dependence on an assigned priority for the first supported power receiver.

9. The wireless power transmitter apparatus of any previous claim wherein the power reserver (209) is arranged to transmit an indication of a desired change in a reserved power level for the first supported power receiver to the first supported power receiver.

10. The wireless power transmitter apparatus of any previous claim wherein the power reservation change request includes an indication of a time interval for which the first reserved power level is requested.

11. The wireless power transmitter apparatus of any previous claim wherein the response includes an indication of a time interval for which a changed reserved power level for the first supported power receiver is accepted, and the power reserver (209) is arranged to determine the reserved power level for the first power receiver in dependence on the changed reserved power level for a time interval determined in dependence on the indication of the time interval.

12. The wireless power transmitter apparatus of any previous claim wherein the power reserver (209) is further arranged to transmit a further power reservation change request to a second supported power receiver of the second set of power receivers, and to reserve a reserved power level for the second power receiver, the reserved power level for the second power receiver being determined in dependence to a response to the further power reservation change request received from the second supported power receiver.

13. The wireless power transmitter apparatus of claim 12 wherein power reserver (209) is arranged to transmit the further power reservation change request to the second supported power receiver in response to a detection that a total reserved power level reserved for the set of supported power receivers following determination of a reserved power level for the first supported power receiver in dependence on the response to the power reservation change request exceeds a threshold.

14. The wireless power transmitter apparatus of any previous claim wherein the power reserver (211) is arranged to determine the maximum power level threshold in dependence on a measure of a maximum power level of a supply power for the power transmitter apparatus.

15. A power receiver (105) for wirelessly receiving power from a power transmitter (101) via an electromagnetic power transfer signal, the power receiver (105) comprising:
an inductive power extraction element (107) arranged to extract power from the power transfer signal;
a communication unit (307, 309) arranged to communicate with the power transmitter (101);
a power reservation controller (301) arranged to request reserved power levels from the power transmitter (101), a reserved power level being a guaranteed power level for a power transfer; wherein
the power reservation controller (301) is further arranged to, in response to the communication unit (307, 309) receiving a power reservation change request from the power transmitter (101),
determine a reduced reserved power level being a lower reserved power level than a currently reserved power level, and
transmit a modified reserved power level request to the power transmitter (101), the modified reserved power level request being a request for a change of the currently reserved power level to the reduced reserved power level.

16. A method of operation for a wireless power transmitter apparatus (101) for wirelessly providing power to multiple power receivers (105) via inductive power transfer signals, the method comprising:
a plurality of power transfer coils (103) generating the power transfer signals;
generating drive signals for the plurality of power transfer coils (103) to generate the power transfer signals;
communicating with multiple power receivers (105);
determining reserved power levels for power transfer to power receivers;
controlling the driver circuit to constrain power levels of the drive signals to not exceed reserved power levels;
wherein determining reserved power levels include in response to receiving the power reservation request performing the steps of:
determining a combined reserved power level being a combined level of at least the first reserved power level and reserved power levels for a set of supported power receivers (105) comprising power receivers other than the first power receiver (105) for which a power level is reserved;
comparing the combined reserved power level to a maximum power level threshold;
transmitting a power reservation change request to a first supported power receiver (105) being a power receiver of the set of supported power receivers (105) if the combined reserved power level exceeds the maximum power level threshold; and
reserving a reserved power level for the first power receiver (105), the reserved power level for the first power receiver (105) being determined in dependence on a response to the power reservation change request received from the first supported power receiver (105).

17. A method of operation for a power receiver (105) wirelessly receiving power from a power transmitter (101) via an electromagnetic power transfer signal, the power receiver (105) comprising:
an inductive power extraction element (107) arranged to extract power from the power transfer signal;
a communication unit (307, 309) arranged to communicate with the power transmitter (101); and
a power reservation controller (301) arranged to request reserved power levels from the power transmitter (101), a reserved power level being a guaranteed power level for a power transfer; wherein the method comprises:
receiving a power reservation change request from the power transmitter (101), determining, in response to receiving the power reservation change request from the power transmitter (101), a reduced reserved power level being a lower reserved power level than a currently reserved power level, and
transmitting a modified reserved power level request to the power transmitter (101), the modified reserved power level request being a request for a change of the currently reserved power level to the reduced reserved power level.

18. A wireless power transfer system comprising a power transmitter in accordance with any of claims 1-14 and a power receiver in accordance with claim 15.
